# EUROPÄISCHE PATENTSCHRIFT

(11) **EP 1 330 592 B1**
(45) Veröffentlichungstag und Bekanntmachung des Hinweises auf die Patenterteilung: **27.06.2007**
(21) Anmeldenummer: 01992824.1
(22) Anmeldetag: 19.10.2001
(51) Int. Cl.: F01B 17/04, F02B 69/00, F01K 21/00, F01K 23/06, F01K 7/00

(54) **VERFAHREN ZUM BETREIBEN EINER DAMPF-WÄRMEKRAFTMASCHINE, INSBESONDERE ALS FAHRZEUG-ANTRIEBSAGGREGAT**
METHOD FOR THE OPERATION OF A STEAM THERMAL ENGINE, IN PARTICULAR AS A VEHICLE POWER UNIT
PROCEDE DE FONCTIONNEMENT D'UN MOTEUR THERMIQUE A VAPEUR, EN PARTICULIER COMME MECANISME D'ENTRAINEMENT DE VEHICULE

(30) Priorität: 01.11.2000 DE 10054022
(43) Veröffentlichungstag der Anmeldung: 30.07.2003
(73) Patentinhaber: Bayerische Motoren Werke Aktiengesellschaft, 80809 München (DE)
(72) Erfinder: FREYMANN, Raymond, D-80935 München (DE)
(86) Internationale Anmeldenummer: PCT/EP2001/012122
(87) Internationale Veröffentlichungsnummer: WO 2002/036938

(56) Entgegenhaltungen:
- EP-A- 0 076 885
- EP-A- 0 902 168
- DE-A- 2 116 824
- DE-A- 19 610 382
- DE-C- 19 847 742
- GB-A- 1 554 766
- US-A- 4 031 705

## Beschreibung

Die vorliegende Erfindung betrifft ein Verfahren zum Betreiben einer Dampf-Wärmekraftmaschine und eine Vorrichtung hierfür. Insbesondere betrifft die Erfindung eine Dampfmaschine, die mit Abwärme insbesondere aus einem Brenner oder Verbrennungsmotor betrieben werden kann.

Die DE 196 10 382 A1 zeigt einen Dampfmotor, dessen Arbeitsmedium in einem Abgaswärmetauscher in überhitzten Dampf umgewandelt wird. Der Abgaswärmetauscher erhält seine Energie aus der Verlustenergie bzw. Abwärme eines mit dem Dampfmotor gekoppelten Verbrennungsmotors. Dazu wird der Abgaswärmetauscher einerseits vom Kühlmittel des Verbrennungsmotors und andererseits vom Abgas des Verbrennungsmotors durchströmt.

Bei dieser Anlage wird demzufolge versucht, die Verlustwärme eines Verbrennungsmotors zu nutzen, um den Gesamtwirkungsgrad der Anlage zu erhöhen. Für einen Verbrennungsmotor gilt bei optimalen Betriebszuständen die Faustformel, daß die in Form von Kraftstoff zugeführte Energie zu einem Drittel in mechanische Energie umgewandelt wird, wobei die verbleibenden zwei Drittel zu einem Drittel über das Kühlwasser und zu einem weiteren Drittel über das heiße Abgas abgeführt werden.

Um die Abwärme eines Verbrennungsmotors zu nutzen, ist ein hoher technischer Aufwand erforderlich, der aus der Tatsache resultiert, daß zwei Medien als Übertrager der Verlustenergie eines Verbrennungsmotors vorhanden sind, nämlich das Kühlwasser und das Abgas. Die in beiden Medien vorhandenen Energien können nur unzureichend einem einzigen System zur Energierückgewinnung bzw. Energieumwandlung zugeführt werden, da ihre jeweiligen thermodynamischen Kenngrößen zu unterschiedlich sind. So liegt z.B. das Temperaturniveau von Kühlwasser bei ca. 100°C, das vom Abgas dagegen bei ca. 300°C bei Betriebspunkten mit niedriger Last bis hin zu 900°C bei Betriebspunkten mit hoher Last der Verbrennungsmaschine.

Wird zum Beispiel Wasser als Medium im Kreislauf der Wärmekraftmaschine eingesetzt, so stellt sich bei einem Druck von 1 bar eine Siedetemperatur von 100°C ein. Zur Realisierung eines gewünschten Druckniveaus von 10 bar wäre aber eine Temperatur von 180°C erforderlich. Damit scheidet das Kühlwasser des Verbrennungsmotors als Energielieferant aus, da die Kühlwassertemperatur bei mindestens 200°C liegen müßte zur Gewährleistung des erforderlichen Energietransfers über einen Wärmetauscher.

Ein weiteres Problem besteht darin, daß die gesamte Anlage einfach aufgebaut sein muß, um ein geringes Gewicht zu erzielen, damit der Einsatz im automobilen Bereich möglich ist.

Der vorliegenden Erfindung liegt daher die Aufgabe zugrunde, eine Wärmekraftmaschine zur Verfügung zu stellen, die eine schnelle und effiziente Umwandlung von in Medien gespeicherten Wärmeenergien mit unterschiedlichen thermodynamischen Kenngrößen in mechanische Energie ermöglicht.

Diese Aufgabe wird gelöst durch ein Verfahren zum Betreiben einer Wärmekraftmaschine mit den Merkmalen von Patentanspruch 1 und durch eine Vorrichtung mit den Merkmalen nach Anspruch 11.

Indem das Arbeitsmedium einer Wärmekraftmaschine in einem Siedebehälter auf eine niedrige Temperatur von bevorzugt Siedetemperatur bei einem niedrigen Druck erwärmt wird, Dampf aus dem Siedebehälter einem Druckkessel zugeführt wird, in welchem der Dampf auf eine hohe Temperatur erhitzt wird, flüssiges Arbeitsmedium (bzw. Kondensat) aus dem Siedebehälter in den Druckkessel eingespritzt wird, wobei das Arbeitsmedium augenblicklich verdampft wird, wodurch der Druck im Druckkessel stark ansteigt, und der Heißdampf aus dem Druckkessel einer Entspannungseinrichtung zugeführt wird, kann die Wärmeenergie aus Medien mit zwei unterschiedlichen thermodynamischen Kenngrößen effizient in Heißdampf umgewandelt werden, der wiederum in der Entspannungseinrichtung wirkungsvoll in mechanische Energie umgesetzt werden kann.

Durch das Einspritzen von siedendem Arbeitsmedium in den mit z.B. heißem Abgas beheizten Druckkessel, in welchem sich bereits eine gewisse Menge an Heißdampf befindet, ist eine spontane und enorm starke Druckerhöhung im Druckkessel möglich, die der Entspannungsvorrichtung zugeführt werden kann.

Auf diese Weise kann besonders vorteilhaft der Siedebehälter mit Kühlwasser eines Verbrennungsmotors und der Druckkessel mit dem Abgasstrom des Verbrennungsmotors geheizt werden, wobei ein hohes Druckniveau im Kreislauf der Wärmekraftmaschine erzeugt werden kann. Oder der Siedebehälter wird mit dem bereits durch die Entspannungsvorrichtung entspannten Dampf und der Druckkessel durch einen Brenner geheizt.

In einer besonders vorteilhaften Ausführung wird der Dampf aus dem Siedebehälter vorkomprimiert und dann dem Druckkessel zugeführt, wobei sich sowohl der Druck als auch die Temperatur des Dampfes im Druckkessel erhöht bevor das flüssige Arbeitsmedium in den Druckkessel eingespritzt wird. Auf diese Weise wird das Drucknieveau unter gleichzeitiger Temperaturerhöhung im Druckkessel zusätzlich gesteigert.

In einer besonders vorteilhaften Ausführung wird nicht nur der Siedebehälter durch heißes Kühlmittel eines Verbrennungsmotors und/oder durch den bereits in der Entspannungsvorrichtung entspannten Dampf und der Druckkessel durch die Abgase des Verbrennungsmotors geheizt, sondern es werden die Abgase nach dem Aufheizen des Druckkessels noch zum Heizen des auf niedrigerem Temperaturniveau arbeitenden Siedebehälters verwendet. Dadurch kann die Abwärme aus einem Verbrennungsmotor noch vollständiger für die Entspannungseinrichtung genutzt werden.

Indem die Welle eines Verbrennungsmotors, dessen Abwärme für die Entspannungsvorrichtung rückgewonnen wird, mit der Welle der Entspannungseinrichtung über eine Kupplung und/oder über ein Untersetzungsgetriebe gekoppelt ist, können die Enspannungsvorrichtung und der Verbrennungsmotor bei entsprechender Anpassung der unterschiedlichen Drehzahlniveaus auf einfache Weise auf eine Welle zusammengeführt werden oder bei Bedarf voneinander entkoppelt werden.

In einer besonders vorteilhaften Ausführung sind als Entspannungseinrichung wenigstens zwei Zylinder einer Kolbenmaschine mit jeweils einem zugeordneten Druckkessel vorgesehen, wobei eine Hinundherbewegung der Kolbenmaschine zum Vorkomprimieren des aus dem Siedebehälter kommenden Dampfes verwendbar ist und eine darauffolgende Hinundherbewegung des Kolbens zum Entspannen von Hochdruckdampf aus dem Druckkessel verwendbar ist. Hierbei ist es möglich den Dampferzeugungsvorgang in einem Druckkessel und dessen Entspannung in einer der Entspannungseinrichtungen derart wechselweise beispielsweise zwischen den beiden Zylindereinheiten ablaufen zu lassen, daß genügend Zeit für die jeweilige Dampfaufbereitung im jeweiligen Druckkessel bleibt.

Weitere vorteilhafte Ausführungen der Erfindung sind in den Unteransprüchen definiert.

Drei bevorzugte Ausführungsbeispiele werden im folgenden unter Hinweis auf die beigefügten Zeichnungen näher beschrieben, wobei:
Fig. 1 ist eine schematische Darstellung einer erfindungsgemäßen Wärmekraftmaschine nach einem ersten Ausführungsbeispiel;
Fig. 2 ist eine schematische Darstellung, der den Arbeitszyklus der Wärmekraftmaschine nach dem ersten Ausführungsbeispiel gemäß Fig. 1 zeigt;
Fig. 3a zeigt eine Schnittansicht durch den Druckkessel nach dem Ausführungsbeispiel gemäß Fig. 1.
Fig. 3b zeigt eine Schnittansicht durch den Druckkessel entlang der Schnittlinie A-A nach Fig. 3a;
Fig. 4 ist eine schematische Darstellung einer erfindungsgemäßen Wärmekraftmaschine nach einem zweiten Ausführungsbeispiel;
Fig. 5 ist eine schematische Darstellung einer erfindungsgemäßen Wärmekraftmaschine nach einem dritten Ausführungsbeispiel;

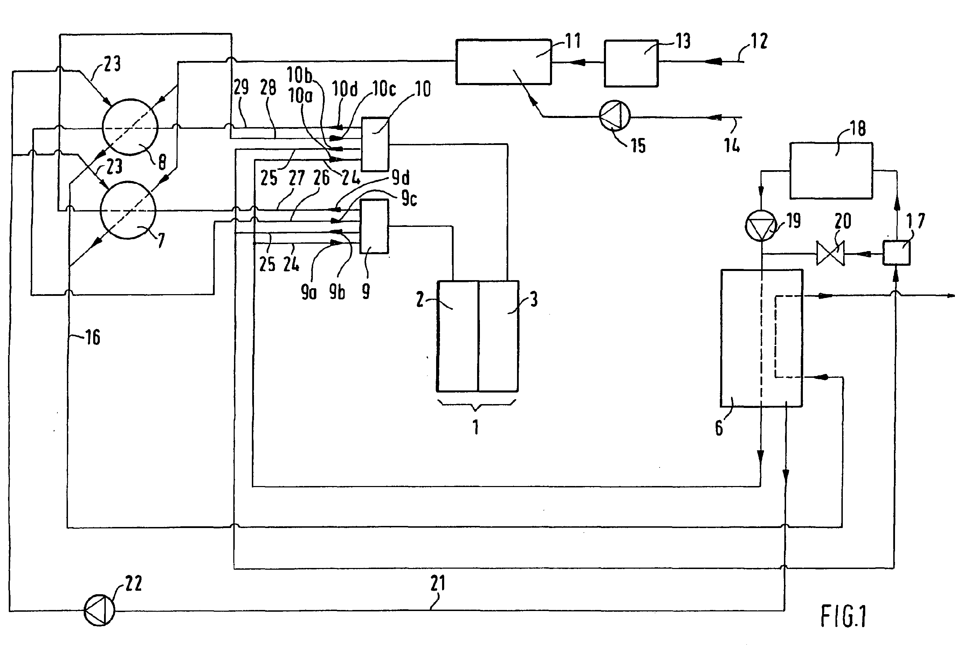

Anhand von Fig. 1 bis 3 wird der Aufbau und die Funktionsweise eines ersten bevorzugten Ausführungsbeispiels der Wärmekraftmaschine erläutert.

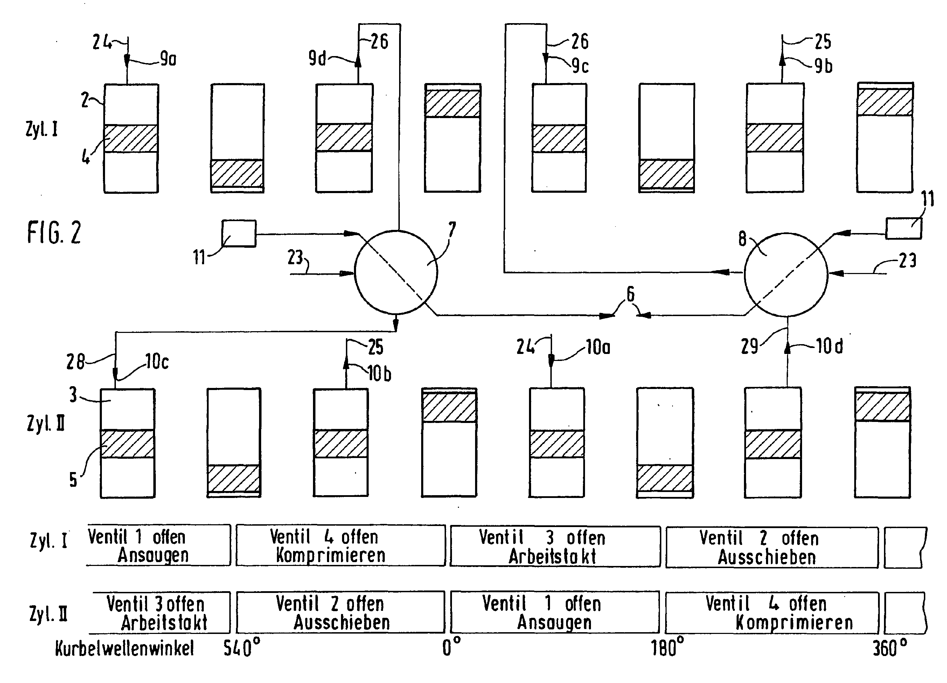

Nach Fig. 1 hat die Wärmekraftmaschine eine Entspannungseinrichtung 1 mit einem ersten Zylinder 2 und einem zweiten Zylinder 3, in denen jeweils ein Kolben 4 und 5 (schematisch in Fig. 2 dargestellt) reziprok beweglich angeordnet ist. In den Zylindern 1 und 2 wird in einer Dampferzeugungseinrichtung erzeugter, überhitzter Dampf eines Arbeitsmediums, das vorliegend bevorzugt Wasser ist, entspannt, um über die hin und her beweglichen Kolben 4 und 5 mechanische Energie an eine Welle (nicht dargestellt) abzugeben.

Die Dampferzeugungseinrichtung hat einen als Wärmetauscher ausgebildeten Siedebehälter 6, in dem das Arbeitsmedium bevorzugt auf Siedetemperatur, vorzugsweise auf ca. 80 bis 130°C bei 1 bis 3 bar, erhitzt wird, einen ersten 7 und einen zweiten als Wärmetauscher ausgebildeten Druckkessel 8, bei dem überhitzter Dampf, d.h. die dampfförmige Phase des Arbeitsmediums, mit einer Temperatur von bevorzugt 300°C bis 600°C, bei einem Druck von 6 bis 18 bar erzeugt wird. Dem ersten und dem zweiten Druckkessel 7, 8 ist je eine erste 9 und eine zweite Ventileinheit 10 zugeordnet. Jede Ventileinheit 9, 10 hat ein erstes 9a, 10a, ein zweites 9b, 10b, ein drittes 9c, 10c und viertes Ventil 9d, 10d.

Die Druckkessel 7, 8 werden mit heißem Abgas aus einem Brenner 11 geheizt. Der Brenner 11 wird einerseits über eine Luftleitung 12 und ein Gebläse 13 mit Umgebungsluft bzw. Sauerstoff und andererseits über eine Kraftstoffleitung 14 und eine Pumpe 15 mit Kraftstoff (Benzin, Diesel Gas, usw.) versorgt. Nachdem das Abgas aus dem Brenner einen Großteil seiner Wärmemenge zur Dampferzeugung im Druckkessel abgegeben hat, gelangt das Abgas nach dem Passieren der Druckkessel 7, 8 über eine Leitung 16 in den Siedebehälter 6, um das dort in flüssigem und teilweise dampfförmigem Zustand befindliche Wasser zu heizen, wobei die Restwärme aus dem Abgas weiter genutzt wird. Der entspannte Dampf wird über einen Ventilblock 17 einem Kondensator 18 zugeführt, in dem der Dampf wieder verflüssigt wird. Über eine Pumpe 19 wird das Kondensat dem Siedebehälter 6 zugeführt. Der Ventilblock 17 kann derart geschaltet werden, daß der von der Entspannungseinrichtung 1 kommende entspannte Dampf über eine Drossel 20 direkt unter Umgehung des Kondensators 18 in den Siedebehälter 6 geleitet wird. Der Ventilblock 17 steuert die Weiterleitung des entspannten Dampfes entweder zum Kondensator 18 oder zum Siedebehälter 6 in Abhängigkeit von der Temperatur und/oder des Flüssigkeitsstandes im Siedebehälter 6.

Siedendes Arbeitsmedium aus dem Siedebehälter 6 wird über eine Leitung 21 und eine Hockdruckpumpe 22 und eine Einspritzdüse 23 in den Druckkessel 7, 8 eingespritzt.

Die erste 9 und die zweite Ventileinheit 10 ist bevorzugt integral im Zylinderkopf (nicht dargestellt) des jeweils zugeordneten ersten und zweiten Zylinders 2, 3 ausgebildet. Die vier Ventile 9a bis 9d, 10a bis 10d einer Ventileinheit 9, 10 sind bevorzugt herkömmliche pilzförmige Ventile, wie sie auch in einem vierventiligen Verbrennungsmotor Verwendung finden. Als Ventil 9a bis 9d, 10a bis 10d kann jedoch jede Art von Kanalöffnungs- und Schließeinrichtung wie z.B. eine Drehschieber- oder Längsschiebereinheit verwendet werden. Die Ventilsteuerung erfolgt mechanisch z.B. über eine Nockenwelle oder sie erfolgt elektrisch über gesteuerte Elektromagnete oder über pneumatische oder hydraulische über entsprechende Aktuatoren oder über eine andere geeignete Betätigungseinrichtung.

Ein erstes Ventil 9a, 10a einer jeden Ventileinheit 9, 10 ist über eine Leitung 24 mit dem Siedebehälter 6 verbunden. Ein zweites Ventil 9b, 10b einer jeden Ventileinheit 9, 10 ist über eine Leitung 25 mit dem Ventilblock 17 bzw. dem Kondensator 18 und/ oder dem Siedebehälter 6 verbunden. Ein drittes Ventil 9c der ersten Ventileinheit 9 ist über eine Leitung 26 mit dem zweiten Druckkessel 8 verbunden. Ein viertes Ventil 9d der ersten Ventileinheit 9 ist über eine Leitung 27 mit dem ersten Druckkessel 7 verbunden. Ein drittes Ventil 10c der zweiten Ventileinheit 10 ist über eine Leitung 28 mit dem ersten Druckbehälter 7 verbunden. Ein viertes Ventil 10d der zweiten Ventileinheit 10 ist über eine Leitung 29 mit dem zweiten Druckbehälter 8 verbunden.

Nachstehend wird unter Bezugnahme auf Fig. 2 die Arbeitsweise der Wärmekraftmaschine mit ihren zwei Zylindern 2, 3 und ihren jeweils zugeordneten Druckkesseln 7, 8 näher erläutert.

Zunächst wird die Arbeitsfolge des ersten Zylinders 2 beschrieben: Takt 1: Ansaugen von Dampf über das erste Ventil 9a des ersten Ventilblocks 9 aus dem Siedebehälter 6 durch den vom oberen Totpunkt aus nach unten fahrenden Kolben 4 des ersten Zylinders 2. Bei dem im Ausführungsbeispiel verwendeten Wasserdampf liegen die typischen thermodynamischen Größen von t=100°C, p=2 bar vor. Das erste Ventil 9a ist dabei während eines Kurbelwinkels von etwa 180° geöffnet.

Takt 2: Komprimieren des Wasserdampfs durch den vom unteren Totpunkt aus nach oben fahrenden Kolben 4 des ersten Zylinders 2 und Ableiten des komprimierten Dampfes über das vierte Ventil 9d des ersten Ventilblocks 9 und die Leitung 27 in den ersten Druckkessel 7. Das vierte Ventil 9d des ersten Ventilblocks 9 ist während der in etwa 180° Kurbelwinkel dauernden Komprimierungsphase geöffnet.

Nach Schließen der Leitung 27 wird in den ersten Druckkessel 7 erhitztes flüssiges Arbeitsmedium (mit einer bevorzugten Temperatur von t=100°C) eingespritzt, das aus dem Siedebehälter 6 über die Leitung 21, die Hochdruckpumpe 22 und das Einspritzventil 23 zugeführt wird. Dieses Wasser kann durch die im Druckkessel 7 herrschende hohe Temperatur augenblicklich zum Verdampfen gebracht werden, wodurch sich der Druck im Druckkessel 7 stark erhöht, typisch auf 6 - 18 bar.

Takt 3: Das dritte Ventil 9c des ersten Ventilblocks 9 wird geöffnet und leitet den im zweiten Druckkessel 8 bereits aufbereiteten überhitzten Dampf von typisch 6 - 18 bar in den ersten Zylinder 2, dessen Kolben 4 sich noch im oberen Totpunkt befindet, um den im zweiten Druckkessel 8 befindlichen Heißdampf zu entspannen. Die dabei entstehende mechanische Arbeit wird an die Kurbelwelle (nicht dargestellt) abgegeben.

Takt 4 :Ist der Kolben 4 des ersten Zylinders 2 am unteren Totpunkt angelangt, so wird das vierte Ventil 9b des ersten Ventilblocks 9 geöffnet und der entspannte Dampf über den sich wieder nach oben bewegenden Kolben 4 über die Leitung 25, den Ventilblock 17 entweder über den Kondensator 18 und die Pumpe 19 oder direkt über die Drossel 20 dem Siedebehälter 6 zugeführt.

Diese Arbeitstakte laufen im zweiten Zylinder 3 analog ab, wobei der von ersten Zylinder 2 vorkomprimierte erste Druckkessel 7 über den zweiten Zylinder 3 entspannt wird. Zeitlich arbeiten die beiden Zylinder 2 und 3 derart versetzt, daß nach dem Einspritzen von siedendem Wasser bzw. Arbeitsmedium in den jeweiligen Druckkessel 7, 8 die maximale Zeit für die Aufbereitung des Drucks gegeben ist.

Beziehungsweise während der erste Zylinder 2 Dampf aus dem Siedebehälter ansaugt, und dem zweiten Druckkessel 8 in vorkomprimierter Form zuführt, entspannt der zweite Zylinder 3 überhitzten Dampf aus dem ersten Druckkessel 7 und erzeugt mechanische Arbeit und umgekehrt, so daß eine Verweilzeit des Dampfes im Druckkessel 7, 8 von 180° Kurbelwellenwinkel entsteht, die zur Verdampfung des in den Druckkessel 7, 8 eingespritzten flüssigen Arbeitsmediums aus dem Siedebehälter 6 nutzbar ist.

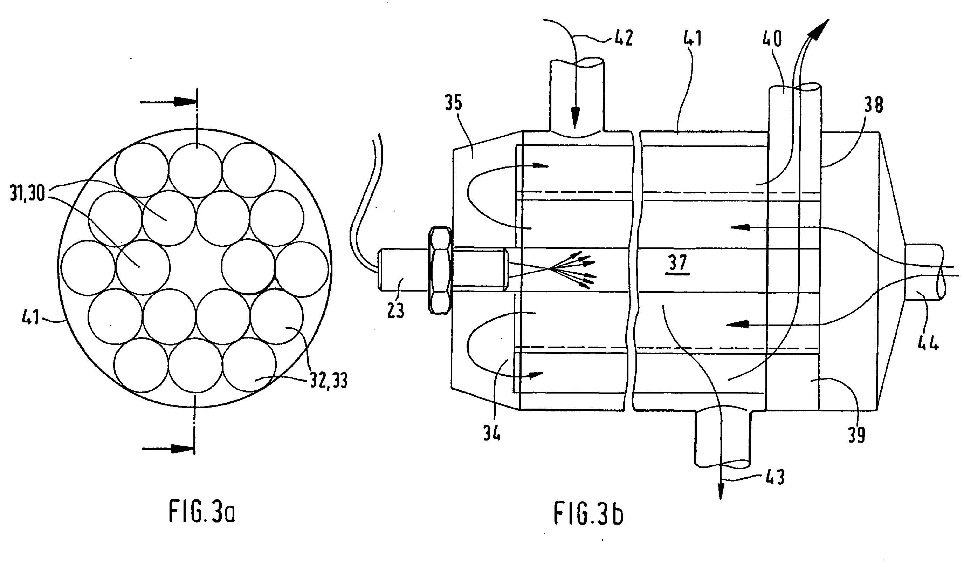

Gemäß Fig. 3a und 3b ist der Druckkessel 7 näher dargestellt, der Rohre 30, die in einem inneren Ring 31 angeordnet sind und weitere Rohre 32 hat, die in einem äußeren Ring 33 um den innerer Ring 31 angeordnet sind. Der innere Ring 31 von Rohren 30 ist an einer Stirnseite 34 über eine Überströmkammer 35 mit dem äußeren Ring 33 von Rohren 32 verbunden. An der einen Stirnseite 34 des Druckkessels 7 ist mittig eine Einspritzeinrichtung 36 zum Einspritzen von flüssigem Arbeitsmedium angeordnet, die flüssiges Arbeitsmedium in den vom inneren Ring 31 umgebenen Raum 37 einspritzt. An der anderen Stirnseite 38 ist ein zu den Rohren 30 des inneren Rings 31 hin geöffneter Abgaseinlaß 44. An der gleichen Stirnseite 38 ist eine Sammelkammer 39 um die Endseite der Rohre 32 des äußeren Rings 33 angeordnet, die mit einem Abgasauslaß 40 versehen ist. Die gesamte Anordnung ist mit einem druckbeständigen Mantel 41 umgeben, an dem ein Dampfeinlaß 42 und ein Dampfauslaß 43 vorgesehen sind.

Heiße Gase strömen über den Abgaseinlaß 44 in die Rohre 30 des inneren Rings 31 und strömen auf der gegenüberliegenden Stirnseite 34 in die Rohre 32 des äußeren Rings 33 über die Überströmkammer 35 über, durch die Rohre 32 des äußeren Rings 33 hindurch und treten über die Sammelkammer 39 und den Abgasauslaß 40 wieder aus dem Druckkessel 7, 8 aus. Am Dampfeinlaß 42 wird bevorzugt vorkomprimierter Dampf zugeführt. Über die Einspritzdüse 23 wird flüssiges, jedoch siedendes Arbeitsmedium, z.B. Wasser, eingespritzt. Das eingespritzte Arbeitsmedium verdampft durch die hohe Temperatur im Druckkessel 7, 8 augenblicklich und vermischt sich mit dem vorkomprimierten Dampf. Nach einer vorbestimmten Verweildauer, die gewährleistet, daß Dampf in einer ausreichenden Menge mit der gewünschten Temperatur und dem gewünschten Druck gebildet wurde, wird der Dampf über den Dampfauslaß 43 der Entspannungseinrichtung 1 zugeführt.

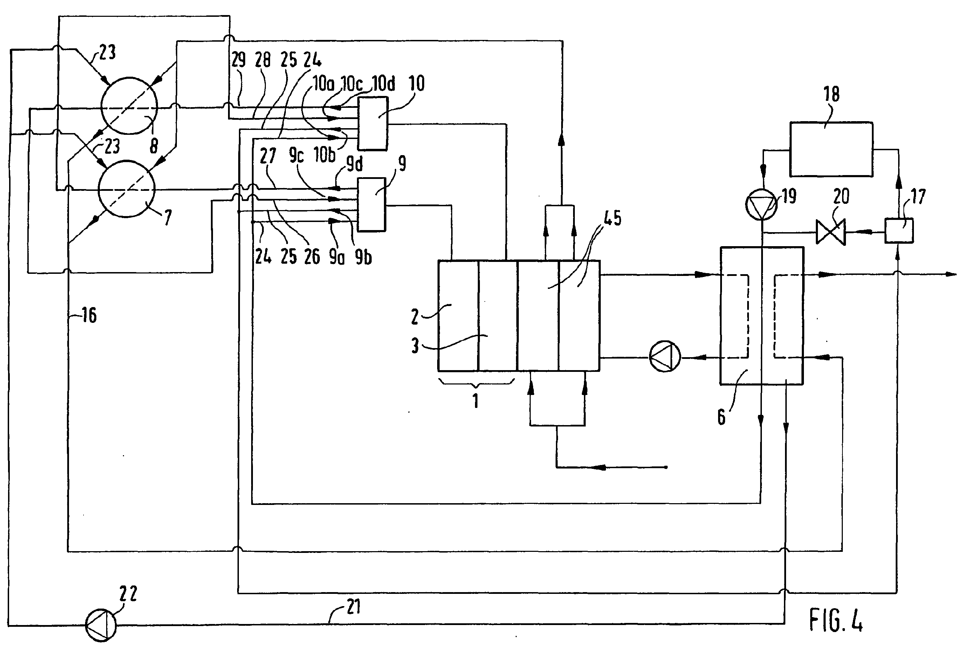

Gemäß Fig. 4 ist ein zweites Ausführungsbeispiel dargestellt, das sich vom ersten Ausführungsbeispiel gemäß Fig. 1 bis 3 nur dadurch unterscheidet, daß anstatt des Brenners 11 ein Verbrennungsmotor 45 vorgesehen ist, der mit der Entspannungseinrichtung 1 direkt, oder über eine Kupplung (nicht dargestellt) und/oder ein Getriebe (nicht dargestellt) gekoppelt ist. Das Kühlwasser des Verbrennungsmotors 45 wird dem Siedebehälter 6 zugeführt, um diesen zu heizen, wobei die heißen Abgase des Verbrennungsmotors 45 den Druckkesseln 7, 8 zugeführt werden, um diese auf die gewünschte hohe Temperatur zu heizen.

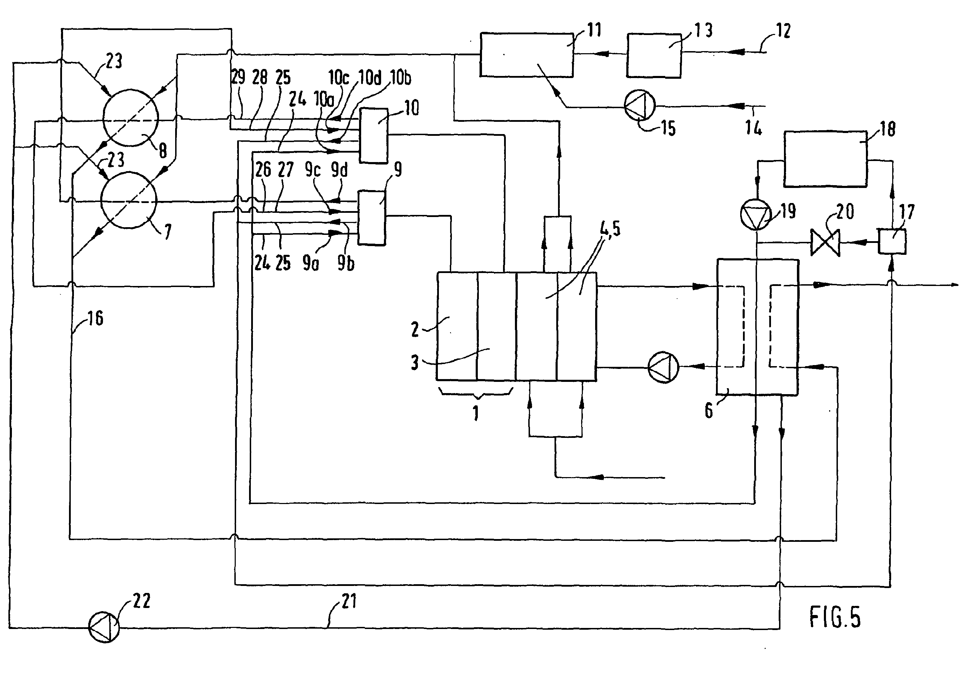

Gemäß Fig. 5 ist ein drittes Ausführungsbeispiel dargestellt, das eine Kombination aus dem ersten Ausführungsbeispiel gemäß Fig. 1 bis 3 und dem zweiten Ausführungsbeispiel gemäß Fig. 4 ist. D.h., daß die Wärmekraftmaschine nach dem dritten Ausführungsbeispiel sowohl über einen Brenner 11 als auch über einen Verbrennungsmotor 45 verfügt. Der Brenner 11 wird bei Bedarf zugeschaltet, dies ist insbesondere der Fall während der Warmlaufphase des Verbrennungsmotors 45, oder wenn maximale Leistung gefordert wird.

Beim zweiten (Fig. 4) und dritten Ausführungsbeispiel (Fig. 5) kann der Verbrennungsmotor 45 bei niedriger Last, oder wenn die Wärmekraftmaschine in einem Fahrzeug verwendet wird, im Schubbetrieb abgeschaltet werden, wobei die im Druckkessel 7, 8 gespeicherte Wärmeenergie noch zum Betreiben der Entspannungsvorrichtung 1 verwendbar ist.

Die vorstehend beschriebenen Ausführungsbeispiele können mit nachstehenden Abwandlungen versehen sein.

Sowohl die Entspannungseinrichtung 1 als auch der Verbrennungsmotor 45 kann anstatt als eine Kolbenmaschine auch als eine Drehkolbenmaschine nach dem Wankelprinzip oder als eine Turbine ausgebildet sein.

Als Arbeitsmedium kann Wasser oder auch jedes andere geeignete Arbeitsmedium, wie z.B. Kohlenwasserstoffe verwendet werden, die bei Normaldruck von 1 bar eine Verdampfungstemperatur zwischen 70°C und 110°C und einen Gefrierpunkt von unter -40°C haben.

Bei einer Koppelung der Dampf-Wärmekraftmaschine mit einem flüssigkeitsgekühlten Verbrennungsmotor ist es bei einer Wärmeabfuhr aus dem Motorkühlmittel in den Siedebehälter vorteilhaft, den Verbrennungsmotor mit einer Kennfeldkühlung auszubilden.

Für den Druckkessel 7, 8 als zweiten Wärmetauscher auf relativ hohem Temperaturniveau kann die Fremd-Abwärme auch oder zusätzlich von einer Brennstoffzelle, insbesondere vom SOFC-Typ, bezogen sein.

## Patentansprüche

1. Verfahren zum Betreiben einer Dampf-Wärmekraftmaschine, insbesondere als Fahrzeug-Antriebsaggregat,
- wobei in einem ersten, als Siedebehälter (6) dienenden Wärmetauscher ein flüssiges Arbeitsmedium auf eine niedrige Temperatur von bevorzugt Siedetemperatur bei einem niedrigen Druck erwärmt wird durch Nutzung einer Fremd-Abwärme von relativ geringer Energie, und weiter
- der im Siedebehälter (6) gebildete Nass-Dampf einem zweiten Wärmetauscher in der Gestaltung eines von einer Fremd-Abwärme von relativ hoher Energie beheizten Druckkessels (7, 8) zugeführt wird zur Erhitzung auf eine relativ hohe Temperatur, und
- wobei ferner flüssiges Arbeitsmedium (bzw. Kondensat) aus dem Siedebehälter (6) von relativ niederer Siedetemperatur in die derart erhitzte Dampfatmosphäre des Druckkessels (7, 8) eingespritzt wird, dass
- mit einer augenblicklichen Verdampfung des eingespritzten Arbeitsmediums von etwa Siedetemperatur unter starkem Druckanstieg ein in einer Entspannungseinrichtung (1) der Wärmekraftmaschine Arbeit verrichtender Heißdampf erzeugt wird, der
- nach Arbeitsverrichtung als Kondensat in den Siedebehälter (6) zurückgeführt wird.

2. Verfahren nach Anspruch 1, **dadurch gekennzeichnet, daß** der Dampf aus dem Siedebehälter (6) vorkomprimiert und dann dem Druckkessel (7, 8) zugeführt wird, wobei sich sowohl der Druck als auch die Temperatur des Dampfes im Druckkessel (7, 8) erhöht bevor das flüssige Arbeitsmedium in den Druckkessel (7, 8) eingespritzt wird.

3. Verfahren nach Anspruch **2**, **dadurch gekennzeichnet, daß** das Temperaturniveau des Areitsmediums im Siedebehälter bevorzugt zwischen t=80°C bis 130°C bei einem Druck von bevorzugt p= 1bar bis 3 bar liegt;
daß der aus dem Siedebehälter (6) stammende Dampf durch das Vorkomprimieren und Weiterleiten in den Druckkessel (7, 8) auf einen bevorzugten Druck von 3 bis 9 bar steigt, wobei die Temperatur im Druckkessel (7, 8) ansteigt; und
daß der Druck im Druckkessel (7, 8) durch das Einspritzen von flüssigem Arbeitsmedium auf bevorzugt 6 bis 18 bar ansteigt.

4. Verfahren nach einem der Ansprüche 1 bis 3, **dadurch gekennzeichnet, daß** der Siedebehälter (6) durch heißes Kühlmittel aus einem Verbrennungsmotor (45) geheizt wird;
daß der Druckkessel (7, 8) durch die Abgase des Verbrennungsmotors (45) geheizt wird, und
daß die Abgase nach dem Aufheizen des Druckkessels (7, 8) zum Heizen des Siedebehälters (6) verwendet werden.

5. Verfahren nach einem der Ansprüche 1 bis 4, **dadurch gekennzeichnet, daß** der Druckkessel (7, 8) durch heiße Gase eines Brenners (11) geheizt wird, und
daß die heißen Gase nach dem Aufheizen des Druckkessels (7, 8) zum Heizen des Siedebehälters (6) verwendet werden.

6. Verfahren nach einem der Ansprüche 1 bis 5, **dadurch gekennzeichnet, daß** die Restwärme des in der Entspannungseinrichtung (1) entspannten Dampfes zum Heizen des Siedebehälters (6) verwendet wird.

7. Verfahren nach einem der Ansprüche 1 bis 6, **dadurch gekennzeichnet, daß** eine Welle eines Verbrennungsmotors (45) mit einer Welle der Entspannungseinrichtung (1) direkt, über eine Kupplung und/oder über ein Getriebe gekoppelt ist.

8. Verfahren nach einem der Ansprüche 1 bis 7, **dadurch gekennzeichnet, daß** die Entspannungseinrichtung (1) eine Kolbenmaschine hat, die wenigstens einen ersten und einen zweiten Zylinder (2, 3) hat, wobei dem ersten Zylinder (2) ein erster Druckkessel (7) und eine erste Ventileinheit (9) mit vier Ventilen (9a-9d) zugeordnet ist und dem zweiten Zylinder (3) ein zweiter Druckkessel (8) und eine zweite Ventileinheit (10) mit vier Ventilen (10a-10d) zugeordnet ist.

9. Verfahren nach Anspruch 8, **dadurch gekennzeichnet, daß** beim ersten Takt des ersten Zylinders (2) Dampf aus dem Siedebehälter (6) über eine Leitung und ein erstes Ventil (9a) der ersten Ventileinheit (9) angesaugt wird,
in einem zweiten Takt der im ersten Zylinder (2) befindliche Dampf komprimiert wird und über ein viertes Ventil (9d)der ersten Ventileinheit (9) und eine Leitung (27) dem ersten Druckkessel (7) zugeführt wird,
nach dem Einspritzen von flüssigem Arbeitsmedium aus dem Siedebehälter (6) in den ersten Druckkessel (7) der entwickelte Dampf über eine Leitung (28) und ein drittes Ventil (10c) der zweiten Ventileinheit (10) dem zweiten Zylinder (3) zum Entspannen zugeführt wird,
der entspannte Dampf aus dem zweiten Zylinder (3) über ein zweites Ventils (10b) der zweiten Ventileinheit (10) einem Kondensator (18) zugeführt wird, und
das Kondensat aus dem Kondensator (18) über eine Pumpe (19) dem Siedebehälter (6) zugeführt wird.

10. Verfahren nach Anspruch 8 oder 9, **dadurch gekennzeichnet, daß** die beiden Zylinder (2, 3) zeitlich derart versetzt arbeiten, daß nach dem Einspritzen von siedendem Arbeitsmedium in den jeweiligen Druckkessel (7 8) die maximale Zeit für die Aufbereitung des Drucks in diesem Druckkessel (7, 8) gegeben ist.

11. Vorrichtung zum Ausführen des Verfahrens nach einem der vorstehenden Ansprüche 1 bis 10 mit einem
- ersten, als Siedebehälter (6) dienenden Wärmetauscher zum Erwärmen eines flüssigen Arbeitsmediums auf eine niedrige Temperatur von bevorzugt der Siedetemperatur bei einem niedrigen Druck durch Nutzung einer Fremd-Abwärme von relativ geringer Energie und einem
- von einer Fremd-Abwärme von relativ hoher Energie beheizbaren Druckkessel (7, 8) in Form eines zweiten Wärmetauschers, zur Erhitzung eines im Siedebehälter (6) gebildeten Nass-Dampfes auf eine relativ hohe Temperatur, wobei
- in den Druckkessel (7, 8) ferner flüssiges Arbeitsmedium (bzw. Kondensat) aus dem Siedebehälter (6) von relativ niederer Siedetemperatur in die erhitzte Dampfatmosphäre einspritzbar ist und einer
- Entspannungseinrichtung (1) der Wärmekraftmaschine zum Entspannen eines augenblicklich im Druckkessel (7, 8) unter starkem Druckanstieg verdampften Arbeitsmediums von etwa Siedetemperatur in Form von Heißgas zur Verrichtung von Arbeit, wobei
- das Arbeitsmedium nach Arbeitsverrichtung in Form von Kondensat in den Siedebehälter (6) rückführbar ist, wobei
- der Siedebehälter (6), der Druckkessel (7, 8) und die Entspannungseinrichtung (1) mittels Verbindungsleitungen und Ventilen (9, 10) verbindbar sind.

12. Vorrichtung nach Anspruch 11, **dadurch gekennzeichnet, daß** der Druckkessel (7, 8) ein Wärmetauscher ist, bei dem Abgas aus einem Brenner (11) oder einem Verbrennungsmotor (45) Dampf für die Entspannungseinrichtung (1) erzeugt.

13. Vorrichtung nach Anspruch 12, **dadurch gekennzeichnet, dass** der Druckkessel (7, 8) und der Brenner eine Einheit bilden.

14. Vorrichtung nach einem oder mehreren der Ansprüche 11 bis 13, **dadurch gekennzeichnet, dass** die Entspannungseinrichtung (1) sowie der Verbrennungsmotor (45) jeweils als eine Kolbenmaschine oder als eine Drehkolbenmaschine oder als eine Turbine ausgebildet ist.

## Claims

1. A method of operating a steam heat engine, epsecially as a drive unit for a vehicle,
- wherein in a first heat exchanger in the form of a boiler (6), a liquid working medium is heated to a low temperature, preferably boiling temperature, at a low pressure by using external waste heat at relatively low energy, and
- the wet steam formed in the boiler (6) is supplied to a second heat exchanger in the form of an air pressure chamber (7, 8) heated by external waste heat at relatively high energy, so as to be heated to a relatively high temperature, and
- wherein liquid working medium (or condensate) from the boiler (6) at a relatively low boiling temperature is injected into the said heated steam atmosphere in the air pressure tank (7, 8), so that
- superheated steam for performing work in an expansion device (1) of the internal combustion engine is generated by instantaneous evaporation of the working medium, injected at approximately boiling temperature, with a great increase in pressure,
- the steam being returned in condensate form to the boiler (6) after performing work.

2. A method according to claim 1, **characterised in that** the steam from the boiler (6) is pre-compressed and then supplied to the air pressure tank (7,8), wherein both the pressure and the temperature of the steam in the air pressure tank (7, 8) are increased before the liquid working medium is injected into the tank (7, 8).

3. A method according to claim 2, **characterised in that** the temperature of the working medium in the boiler is preferably between t = 80°C and 130°C at a pressure of preferably p = 1 to 3 bar; the steam from the boiler (8), after being pre-compressed and conveyed to the air pressure tank (7, 8), rises to a pressure of preferably 3 to 9 bar, wherein the temperature in the tank (7, 8) increases, and the pressure in the tank (7, 8) is increased to preferably 6 to 18 bar by injection of working liquid medium.

4. A method according to any of claims 1 to 3, **characterised in that** the boiler (6) is heated by hot coolant from an internal combustion engine (45), the tank (7, 8) is heated by the exhaust gases from the engine (45) and the exhaust gases are used to heat the boiler (6) after heating the tank (7, 8).

5. A method according to any of claims 1 to 4, **characterised in that** the tank (7, 8) is heated by hot gases from a burner (11) and the hot gases are used to heat the boiler (6) after heating the tank (7, 8).

6. A method according to any of claims 1 to 5, **characterised in that** the residual heat from the steam expanded in the expansion device (1) is used to heat the boiler (6).

7. A method according to any of claims 1 to 6, **characterised in that** a shaft of an internal combustion engine (45) is coupled to a shaft of the expansion device (1), either directly or via a clutch and/or a gear unit.

8. A method according to any of claims 1 to 7, **characterised in that** the expansion device (1) is a piston engine comprising at least a first and a second cylinder (2, 3), wherein the first cylinder (2) is associated with a first air pressure tank (7) and a first valve unit (9) with four valves (9a - 9d) and the second cylinder (3) is associated with a second air pressure tank (8) and a second valve unit (10) with four valves (10a - 10d).

9. A method according to claim 8, **characterised in that** in the first stroke of the first cylinder (2)
steam is sucked from the boiler (6) through a line and a first valve (9a) of the first valve unit (9),
in a second stroke the steam in the first cylinder (2) is compressed and supplied by a fourth valve (9d) of the first valve unit (9) and a line (27) to the first air pressure tank (7),
after liquid working medium from the boiler (6) has been injected into the first air pressure tank (7), the evolved steam is supplied through a pipe (28) and a third valve (10c) of the second valve unit (10) to the second cylinder (3) for expansion,
the expanded steam from the second cylinder (3) is conveyed through a second valve (10b) of the second valve unit (10) to a condenser (18), and
the condensate from the condenser (18) is supplied by a pump (19) to the boiler (6).

10. A method according to claim 8 or claim 9, **characterised in that** the operation of the two cylinders (2, 3) is staggered in time so that after boiling working medium has been injected into an air pressure tank (7, 8) the maximum time is available for building up the pressure in the said tank (7, 8).

11. A device for working the method according to any of the preceding claims 1 to 10, comprising
- a first heat exchanger in the form of a boiler (6) for heating a liquid working medium to a low temperature, preferably the boiling temperature, at a low pressure by using external waste heat at relatively low energy, and
- an air pressure tank (7, 8) in the form of a second heat exchanger operated by relatively high-energy external waste heat for heating wet steam formed in the boiler (6) to a relatively high temperature,
wherein
- liquid working medium (or condensate) having a relatively low boiling temperature and from the boiler (6) is injected into the heated steam atmosphere in the air pressure tank (7, 8) and
- an expansion device (1) belonging to the steam heat engine for expanding a working medium at approximately boiling temperature instantaneously evaporated in the air pressure tank (7, 8) with a high pressure increase to form hot gas for performing work,
wherein
- after performance of work the working medium is recycled in the form of condensate to the boiler (6), wherein
- the boiler (6), the tank (7, 8) and the expansion device (1) are connected by lines and valves (9, 10).

12. A device according to claim 11, **characterised in that** the air pressure tank (7, 8) is a heat exchanger wherein waste gas from a burner (11) or an internal combustion engine (45) generates steam for the expansion device (1).

13. A device according to claim 12, **characterised in that** the tank (7, 8) and the burner form a unit.

14. A device according to one or more of claims 11 to 13, **characterised in that** the expansion device (1) and the internal combustion engine (45) are in the form of a piston engine or a rotating piston engine or a turbine.

## Revendications

1. Procédé de fonctionnement d'un moteur thermique à vapeur, particulièrement comme groupe d'entraînement de véhicule, selon lequel
- un premier échangeur thermique servant de réservoir d'ébullition (6) chauffe un fluide moteur liquide à basse température, d'une température d'ébullition avantageusement à basse pression en utilisant une chaleur perdue externe d'énergie relativement faible, et en outre
- la vapeur humide formée dans le réservoir d'ébullition (6) est amenée vers un deuxième échangeur thermique sous la forme d'un réservoir de pression (7, 8) chauffé par une chaleur perdue externe d'énergie relativement élevée pour être chauffée à une température relativement élevée, et
- le fluide moteur liquide (ou condensat) provenant du réservoir d'ébullition (6) de température d'ébullition relativement faible est injecté dans l'atmosphère de vapeur ainsi chauffée du réservoir de pression (7, 8), de sorte que
- une évaporation instantanée du fluide moteur injecté de la température environ d'ébullition avec une augmentation forte de la pression, génère une vapeur surchauffée exécutant un travail dans un dispositif de détente (1) du moteur thermique à vapeur, et
- après exécution du travail, la vapeur est renvoyée sous forme de condensat dans le réservoir d'ébullition (6).

2. Procédé selon la revendication 1,
**caractérisé en ce que**
la vapeur provenant du réservoir d'ébullition (6) est pré-comprimée puis acheminée au réservoir de pression (7, 8), pour augmenter la pression et la température de la vapeur dans le réservoir de pression (7, 8) avant d'injecter le fluide moteur liquide dans le réservoir de pression (7, 8).

3. Procédé selon la revendication 2,
**caractérisé en ce que**
le niveau de température du fluide moteur dans le réservoir d'ébullition est de préférence de t=80 °C à 130 °C pour une pression préférée de p= 1 bar à 3 bar, la vapeur provenant du réservoir d'ébullition (6) augmente par la pré-compression et l'acheminement dans le réservoir de pression (7, 8) à une pression préférée de 3 à 9 bar, en élevant la température dans le réservoir de pression (7, 8) ; et on augmente la pression dans le réservoir de pression (7, 8) de préférence à 6 à 18 bar, par l'injection de fluide moteur liquide.

4. Procédé selon l'une des revendications 1 à 3,
**caractérisé en ce que**
le réservoir d'ébullition (6) est chauffé par le liquide de refroidissement chaud provenant d'un moteur à combustion (45), le réservoir de pression (7, 8) est chauffé par les gaz d'échappement du moteur à combustion (45), et les gaz d'échappement, après avoir chauffé le réservoir de pression (7, 8) sont employés pour chauffer le réservoir d'ébullition (6).

5. Procédé selon l'une des revendications 1 à 4,
**caractérisé en ce que**
le réservoir de pression (7, 8) est chauffé par les gaz chauds d'un brûleur (11), et on utilise les gaz chauds, après avoir chauffé le réservoir de pression (7, 8) pour chauffer le réservoir d'ébullition (6).

6. Procédé selon l'une des revendications 1 à 5,
**caractérisé en ce que**
la chaleur restante de la vapeur détendue dans le dispositif de détente (1) sert à chauffer le réservoir d'ébullition (6).

7. Procédé selon l'une des revendications 1 à 6,
**caractérisé en ce qu'**
un arbre d'un moteur à combustion (45) est couplé directement à un arbre du dispositif de détente (1), par un embrayage et/ou par un réducteur.

8. Procédé selon l'une des revendications 1 à 7,
**caractérisé en ce que**
le dispositif de détente (1) est une machine à pistons comportant au moins un premier et un deuxième cylindres (2, 3), avec un premier réservoir de pression (7) et une première unité de soupapes (9) comportant quatre soupapes (9a-9d) associés au premier cylindre (2), et un deuxième réservoir de pression (8) et une deuxième unité de soupapes (9) comportant quatre soupapes (10a-10d) associés au deuxième cylindre (3).

9. Procédé selon la revendication 8,
**caractérisé en ce que**
lors d'un premier cycle du premier cylindre (2), de la vapeur provenant du réservoir d'ébullition (6) est aspirée par une conduite et une première soupape (9a),
dans un deuxième cycle, la vapeur se trouvant dans le premier cylindre (2) est comprimée et acheminée dans le premier réservoir de pression (7) par une quatrième soupape (9d) de la première unité de soupapes (9) et une conduite (27),
après l'injection du fluide moteur liquide provenant du réservoir d'ébullition (6) dans le premier réservoir de pression (7), la vapeur formée est acheminée par une conduite (28) et une troisième soupape (10c) de la deuxième unité de soupapes (10) vers le deuxième cylindre (3) pour y être détendue,
la vapeur détendue provenant du deuxième cylindre (3) est acheminée vers un condensateur (18) par une deuxième soupape (10b) de la deuxième unité de soupapes (10), et
le condensat issu du condensateur (18) est acheminé vers le réservoir d'ébullition (6) par une pompe (19).

10. Procédé selon la revendication 8 ou 9,
**caractérisé en ce que**
les deux cylindres (2, 3) travaillent de manière décalée dans le temps de manière à ce qu'après l'injection du fluide moteur en ébullition dans le réservoir de pression (7, 8) respectif, on ait le temps maximal de préparation de la pression dans ce réservoir de pression (7, 8).

11. Dispositif pour réaliser le procédé selon l'une des revendications 1 à 10 comprenant :
- un premier échangeur thermique servant de réservoir d'ébullition (6), pour chauffer un fluide moteur liquide à une basse température d'une température d'ébullition de préférence à une basse pression en utilisant une chaleur perdue externe d'énergie relativement faible, et
- un réservoir de pression (7, 8) pouvant être chauffé par une chaleur perdue externe d'énergie relativement élevée sous forme d'un deuxième échangeur thermique pour chauffer une vapeur humide formée dans le réservoir d'ébullition (6) à une température relativement élevée,
- en outre du fluide moteur liquide (ou condensat) provenant du réservoir d'ébullition (6) pouvant être injecté dans l'atmosphère de vapeur chauffée du réservoir de pression (7, 8), et
- un dispositif de détente (1) du moteur thermique pour détendre un fluide moteur évaporé instantanément dans le réservoir de pression (7, 8) avec une augmentation forte de la pression d'une température environ d'ébullition sous forme de gaz chaud pour exécuter un travail,
dans lequel
- le fluide moteur après avoir exécuté le travail, peut être renvoyé sous forme de condensat dans le réservoir d'ébullition (6), et
- le réservoir d'ébullition (6), le réservoir de pression (7, 8) et le dispositif de détente (1) peuvent être reliés au moyen de conduites de liaison et de soupapes (9, 10).

12. Dispositif selon la revendication 11,
**caractérisé en ce que**
le réservoir de pression (7, 8) est un échangeur thermique, dans lequel des gaz d'échappement issus d'un brûleur (11) ou un moteur à combustion (45) forment de la vapeur pour le dispositif de détente (1).

13. Dispositif selon la revendication 12,
**caractérisé en ce que**
le réservoir de pression (7, 8) et le brûleur forment une unité.

14. Dispositif selon l'une ou plusieurs des revendications 11 à 13,
**caractérisé en ce que**
le dispositif de détente (1) ainsi que le moteur à combustion (45) sont respectivement une machine à pistons ou une machine à pistons rotatif ou une turbine.
